# EUROPEAN PATENT SPECIFICATION

(11) **EP 2 240 089 B1**
(45) Date of publication and mention of the grant of the patent: **01.04.2015**
(21) Application number: 08871418.3
(22) Date of filing: 21.10.2008
(51) Int. Cl.: A01L 5/00, A01L 7/02

(54) **ALL-IN-ONE PACKING, PAD AND SHOE FOR HOOF PROTECTION**
UNIVERSALPACKUNG, POLSTER UND HUFSCHUH ZUM HUFSCHUTZ
ENSEMBLE TOUT-EN-UN, COUSSINET ET FER POUR PROTECTION DE SABOT

(30) Priority: 21.01.2008 US 22454 P
(43) Date of publication of application: 20.10.2010
(73) Proprietor: Vettec, Inc., Oxnard CA 93033 (US)
(72) Inventor: ROVELLI, Frank, Oxnard California 93033 (US)
(74) Representative: South, Nicholas Geoffrey
(86) International application number: PCT/US2008/080661
(87) International publication number: WO 2009/094055

(56) References cited:
- US-A- 5 706 898
- US-A- 6 021 851
- US-A- 6 021 851
- US-B1- 6 364 025
- US-B2- 7 124 832

## Description

### BACKGROUND OF THE INVENTION

### 1. Technical Field

This invention relates to hoof protection and more particularly to protection of the hoofs of so-called barefoot horses. Barefoot horses are those that are not given horseshoes on their hoofs partly out of concern for the health of the horses. Normal horse shoeing involves nailing or gluing shoes, of metal or plastic, onto the bottom of each hoof; these shoes are replaced periodically as part of the normal maintenance of hoof heath. See US 6,231,972 for a description of a resinous shoe-like coating formed in-situ on the hoof ground-contacting portions in lieu of a conventional metal shoe. See US 7,174,858 for a description of an overshoe or boot proposed to temporarily protect the hoof as during a recreational ride. While boots can be put on by the rider/owner as needed and no farrier is required, they are costly to acquire and awkward to put on and uncertain of being kept on.

Damage to the hoof from shoe fastening or from ill-fitted or broken shoes suggests that there must be a better way than the way that has been used for millennia. The present invention provides a better way, one that enables the horse to be barefoot in the sense of being without conventional or even updated versions of external shoeing and yet protected from environmental problems.

### 2. Related Art

In typical horse care, in the course of renewing horseshoes, webs of leather, plastic or rubber, called pads, are attached to the hoof edge walls beneath the horse shoe, and sized to extend across the hoof sole and cover the frog and sole containing recessed portion of the hoof, e.g. inserted between the horseshoe and the hoof side wall to protect these sensitive areas of the hoof. Moisture and debris sometimes work their way into the open volume recess defined broadly by the hoof solar or bottom wall (comprising the hoof sole and frog) and the hoof side wall, causing discomfort in or harm to the animal. Efforts to fill the recess have involved adding packing including resins to the sole that can be covered with the web. Resinous packings that adhere to the hoof bottom and side wall have been proposed. See e.g. US 6,009,952. Thus, shoes, packing and pads are known to be used to protect the hoof. The complexity of applying one or all of these expedients to a horse on a recurring basis and achieving adhesion at the side wall edge has been problematic and added expense to the keeping of horses.

US 7,124,832 A discloses methods, devices, and formulations for making and using synthetic hoof shoes, repairing an animal's hooves, and/or providing prophylactic measures for protecting an animal's hooves. In general a synthetic material is applied either in situ to the hoof area of a hoofed animal or is used to produce a pre-molded shoe to be attached to the hoof area of a hoofed animal.

### SUMMARY OF THE INVENTION

It is an object of the invention accordingly to provide products and methods for improving the health of hoofed animals particularly barefoot horses by combining the packing, pad and 'shoe" into a single application that can be effected quickly and at lower expense by a farrier, a veterinarian, or in many cases by the owner. It is a further object to provide a method of both packing with a pad and "shoeing" a horse in a horseshoe-free manner. A further object is to form hoof recess-filling plugs from reactive resin mixtures filled into the hoof recess from a dual cartridge dispenser containing separate, reactive precursor components of the hoof packing and plug-shoe-forming material. Further, the invention objects include providing a hoof pad and packing and shoeless shoe forming method and product therefor that flows easily and readily into the hoof recess and the interstices thereof and remains there even with the hoof face (area of wall normally in contact with the ground) disposed at about 90 degrees to the ground (turning the hoof recess fully upward parallel with the ground is recommended but is not necessary unnecessary). The product sets up nearly immediately to a firm, somewhat resilient plug that adheres to and yet moves with the hoof wall, frog and sole portions as they move under the forces of ground impacts. The plug adhesion particularly at the sidewalls where previous packing products tend to lose adhesion militates against loss of the plug from the recess even over weeks of use, and prevents incursions of environmental hazards such as trail debris and moisture between the plug and the hoof portions.

These and other objects of the invention to become apparent hereinafter are realized in the method for extended protection of a shoe-less hoof as according to appended claim 5.

In this and like embodiments, typically, the method further includes using a plug comprised of urethane resin and smoothing the just dispensed resin with a nonadherent wipe to a desired contour.

In a further method embodiment the invention provides a method for extended protection of a shoe-less hoof as according to appended claim 7.

In this and like embodiments, typically, the invention method includes disposing the hoof to receive the free flowing resin, and smoothing the exposed portion of the plug with a resin-nonadherent film such as a plastic film.

The invention further provides an integral all-in-one packing and pad for barefoot horse hoof protection as according to appended claim 1.

In this and like embodiments, typically, the resin plug is formed in situ, and the resin is a urethane resin formed from reactive components typically jointly introduced into the hoof in admixed relation.

In a further embodiment the invention provides an integral all-in-one packing and pad for barefoot horse hoof protection, as according to appended claim 2.

In this and like embodiments, typically, the resin plug is formed in situ, the resin is formed from reactive components jointly introduced into the hoof, the resin plug reactive components comprise urethane reactants reacting to a resin having a non-flowing condition in less than about 15-20 seconds and having a resistance to deterioration requiring replacement for at least about 15-20 days, a typical period between hoof treatments, and the resin plug reactive urethane components comprise reactants solidifying sufficiently rapidly as to flow into but not out of a horse hoof whose side wall face is held normal to the ground.

### BRIEF DESCRIPTION OF THE DRAWINGS

The invention will be further described in conjunction with the accompanying drawings in which:
Fig. 1 is a hoof side wall face view of the invention all-in-one hoof protection in place on a hoof;
Fig. 2A is a view taken on line 2A-2A in Fig. 1; and
Fig. 2B is a view like Fig. 2A-2A with the hoof being inverted to its normal position with the all-in-one packing, pad and shoe in place.

### DETAILED DESCRIPTION

Horse hoofs are conventionally shod by nailing a horseshoe to the horny side wall exteriorly forming the outer portion of the hoof. Within the side wall and surrounded substantially by the interior part of the hoof side wall are the sole of the hoof and the sensitive frog portion of the hoof, i.e. portions comprising the bottom aspect of the hoof, sometimes referred to as the solar, and generally referred to herein jointly as the hoof bottom wall. These portions of the hoof are not protected from damage from contact with moisture or other forms of debris and harmful objects unless one adds a pad, a web across the hoof sole, usually supported by the horseshoe or horseshoe nails to protect the sole of the hoof. Debris can enter the open recess defined by the hoof bottom wall and surrounding side wall, even under the web unless the recess is filled with a suitable material called packing. Suitable materials will fill all spaces in the volume and prevent voids and interstices from occurring. In the past, foam resins have been employed, but they do not hold up against the stresses imposed in use and allow incursions of debris, moisture and contamination. Other materials are stiff and difficult to work with and like the foam systems do not adhere to the hoof bottom wall and thus allow, especially after wearing for a time, the incursion of debris which is uncomfortable and even harmful to the horse. Other materials initially adherent to the hoof sole and frog are disclosed in US 6,009,952 and described to be placed under a pad or not but to extend to less than the full vertical height of the hoof side wall whereby they form a packing, but not a pad substitute and not a shoe substitute, and do not adequately adhere to the side wall full extent such that packing breakdown can occur over a shorter period than is useful for a shoe product as opposed to a packing product.

The present invention provides a solid, typically noncellular and void-free plug to not only fill the recess as a packing, but due to the dimensions of the plug relative to the hoof recess to extend in persistent adhering relation the full vertical height of the side wall. The plug thus extends the full extent of the recess up to (and beyond in a proper case) the hoof side wall face (the part that contacts the ground in the absence of a shoe). The plug while acting as a packing also takes the place of a pad and being dimensioned as described functions as a shoe substitute. Being adhered to the hoof bottom wall the plug acts against incursive attacks from debris and moisture for weeks of use. The preferred urethane resins herein are broadly disclosed in US 4,869,400, are thixotropic, and are known to be injectable using dual cartridge dispensers which direct reactive components of low viscosity through a static mixer into the hoof recess where their initially low viscosity enables flow throughout the recess and into the nooks, crannies, interstices and voids of the recess. The resin mixture thixotropes, cures, and adheres to the walls, void-free and more resilient than the surrounding hoof to cushion the steps of the horse while protecting from debris incursions.

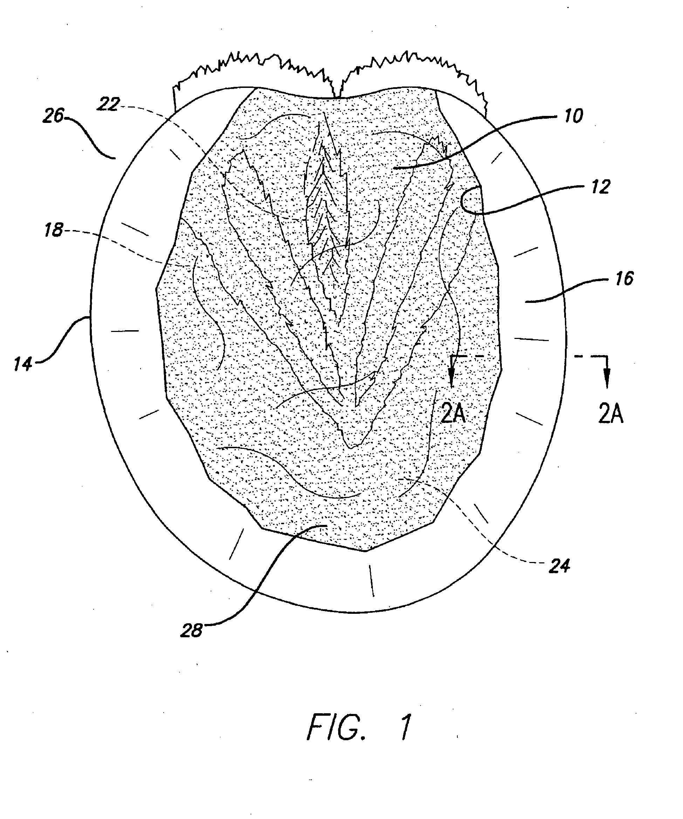

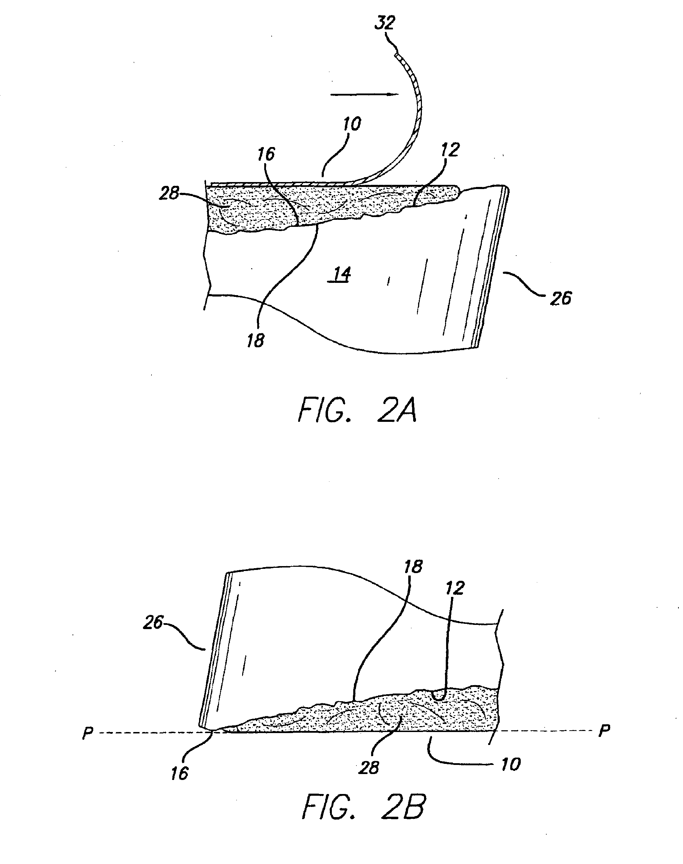

With reference to Figs. 1, 2A and 2B, the all-in-one shoeless hoof protection plug is shown at 10 within recess 12 of hoof 26 formed by hoof side wall 14. No nails are used, no webs are used and there is no horseshoe-like covering of the hoof side wall face 16. The hoof recess 12 is further defined by the hoof bottom wall 18, comprising the hoof sole portion 22 and the hoof frog portion 24, all in hidden lines to show their location under plug 10.

In the invention method, the recess 12 is thoroughly cleaned of debris, old packing material and other extraneous material, ensured to be quite dry, and then filled with plug 10 using an injectable, e.g. liquid resin having the compositions described herein. Because of the thixotropy and rapid cure of the resin, e.g. in from 15 to 20 seconds, the resin reactants can be injected into the recess 12 held sideways that is as the hoof side wall face 16 is disposed normal to the ground, i.e. at substantially 90 degrees to the ground, with no loss of resin, and with no need to support the resin in place pending cure although holding the hoof flat with the frog portion turned upward is to be preferred. The plug 10 is desirably formed in situ to ensure full contact with substantially all the voids, crevices and interstices of the hoof sole portion 22 including areas surrounding and covering the frog portion 24 of the hoof, and to filling the recess 12 so that incursions of debris including moisture into the recess 12 are blocked.

Thus, in one embodiment the invention method for extended protection of a shoe-less hoof 26 having a hoof side wall 14 and bottom wall 18 forming an interior recess 12 from environmental hazards with a resin plug 10, includes cleaning and filling the recess to the full vertical extent of the hoof side wall sufficient for ground contact with the resin plug 10 suitably comprised of urethane resin and adhered to the hoof bottom wall and hoof side wall and freely of an external shoe beyond the plug.

In a further method embodiment the invention method for extended protection of a shoe-less hoof 26 having a hoof side wall 14 and bottom wall 18 forming an interior recess 12 from environmental hazards with a resin plug 10, includes cleaning and filling the recess to the full vertical extent of the hoof side wall sufficient for ground contact in the absence of a shoe with a resin reactant mixture that flows freely into the recess in adhering relation while simultaneously reacting the mixture at a rate precluding spillage of the resin from the recess. This and like invention methods include disposing the hoof side wall face 16 to receive the resin, and smoothing the exposed portion of the plug mass 28 with a plastic film 32 that is not adherent to the uncured or cured resin to contour to a desired shape conducive to the horse's comfort.

The invention thus provides the combination of a horseshoe-free horse hoof 26 and a plug 10 and the further combination of a shoeless horse hoof 26 having a hoof side wall 14 and a bottom wall 18 forming an interior recess 12 and a resin plug 10 adhered to and filling the recess, e.g. to the plane P-P of the hoof wall face, after being formed outside of or in situ in the recess.

A further aspect of the invention is the provision of an all-in-one packing, pad and shoe substitute for barefoot horse hoof protection, comprising a plug 10 of resin in adherent contact with the hoof bottom wall 18 and the full vertical extent of the interior hoof side wall 14 sufficient for ground contact adjacent the hoof wall face 16, the hoof side wall face being free of an external horseshoe. The resin plug 10 is preferably formed in situ employing preferably a urethane resin formed from reactive components typically jointly introduced into the hoof recess 12 in admixed relation.

Preferably, the all-in-one packing, pad and shoe substitute for full barefoot horse hoof protection comprises a plug 10 of solid, void-free resin formed in situ and in adherent contact with the hoof bottom wall 18 and the full vertical extent of the interior hoof side wall 14 against debris and moisture incursions and sized for ground contact adjacent the hoof side wall face 16, the hoof 26 being free of an external horse shoe. Again, the resin plug 10 is formed in situ, the resin is formed from reactive components jointly introduced into the hoof, the resin plug reactive components comprise urethane reactants reacting to a resin having a non-flowing condition normal to the ground.

Resin reactants, such as those taught in the '400 patent cited herein, comprise, e.g. a Side A isocyanate containing reactant and a Side B polyol containing reactant to produce a urethane resin, and are preferably separately packaged in piston and cylinder dual cartridges of the there illustrated, well-known dispenser. The two reagent Sides A and B are expressed from their respective cartridges with hand pressure on a piston pair and upon such expression are intensively mixed in cartridge-attached static mix tip and injected into recess 12.

A typical resin formulation (parts by weight per 100 parts) includes:
Resin reactants, such as those taught in the '400 patent cited herein, comprise, e.g. a Side A isocyanate containing reactant and a Side B polyol containing reactant to produce a urethane resin, and are preferably separately packaged in piston and cylinder dual cartridges of the there illustrated, well-known dispenser. The two reagent Sides A and B are expressed from their respective cartridges with hand pressure on a piston pair and upon such expression are intensively mixed in cartridge-attached static mix tip and injected into recess 12.

A typical resin formulation (parts by weight per 100 parts) includes: in less than about 15-20 seconds and having a resistance to deterioration through loss of sidewall or other adhesion or otherwise requiring replacement for at least about 15-20 days, and the resin plug reactive urethane components comprise reactants solidifying sufficiently rapidly as to flow, preferably, into but not out of a horse hoof 26 whose side wall face 16 is held normal to the ground.

| | Parts (Wt.) |
|---|---|
| Side A | |
| Methylene-bis-dicyclohexane diisocyanate (Desmodur W) (Methylene bis-(4-cyclohexylisocyanate) | 23.4 |
| Polyoxy propylene oxide ether polyol, triol (6000 MW) (Multranol 3901) | 59.8 |
| Isocyanatopropyltriethoxysilane (Silquest A1310) | 1.0 |
| Black pigment | 2.2 |
| Methylene-bis-diphenyl diisocyanate (Isonate 2143L) (Methylenediphenyl diisocyanate) | 13.6 |
| Total, Part A | 100 |
| | |

| Side B | |
|---|---|
| Multranol 3901 (Polyoxy propylene oxide ether polyol, triol (6000 MW)) | 78.0 |
| Diethylmethylbenzenediamine (DETDA) | 18.0 |
| Bismuth naphthenate (Coscat 83) (Neodecanoic acid, bismuth (3+) salt) | 4.0 |
| | |
| Total, Part B | 100 |

Properties of this formulation include:

| | |
|---|---|
| Work time | 15-20 seconds |
| Tack free time | < 7 minutes |
| Hardness | >65 (Shore A) |

The resultant urethane resin plug mass 28 is solid and being free of foam-formers will be free of voids and pockets of air or gas when cured, unlike foam systems which deliberately create voids. The plug mass 28 cures in place, i.e. in situ. Viscosities of the fluid form of the plug 10 are selected such that the incorporation of the incipient plug into the recess 12 is quickly accomplished, in a matter of seconds. The resin plug 10 can be of any of the various known thermoplastic resins or thermosetting resins meeting the invention criteria of low viscosity upon introduction into the recess 12 such as by injection, and rapid gelling or cure to a substantially solid viscosity, e.g. 100,000 centipoises. A rapidly high viscosity gives the resin plug mass 28 the ability to not flow from the recess 12 although the hoof is not held with the recess 12 facing upward. This increased viscosity preferably happens in seconds such as 15-20 seconds or less, but other longer times, where conditions permit, and where the foregoing handling criteria are met can be used. Resin compositions are usefully packaged in dual cartridge packages from which they may be discharged through a static mixer tip to combine into a reactive mixture which is injectable into the recess 12. For rapid cure to a sufficiently gelled state, the amount of catalyst should be selected in concert with desired cure time, e.g. 4% by weight of a urethane reaction catalyst for a <20 second cure to the adequately gelled state.

While resins, such as the preferred urethane resins herein may be initially tacky, this tackiness is quickly lost, typically in under 7 minutes. The preferred application method of incorporation by injection mentioned above makes tackiness or not unimportant since the resins can be injected directly and no hand or spatula contact is required, only a smoothing a plastic film if further smoothness, e.g. of a particular contour is desired.

A useful resin herein is a urethane resin prepared from one or more isocyanates, catalysts, and various polyols, such as disclosed in U.S. Pat. Nos. 4,869,400; 6,009,952; 6,131,665 and 6,412,566, the disclosures of which are hereby incorporated herein in their entirety. Epoxies, polyesters, vinyl resins and other resins meeting the invention criteria can also be used. The term curing herein refers to polymerization, whether of the thermosetting or thermoplastic type, between resin components, or other processes including thixotropy by which a resin or resins change from a liquid to a solid state, including by loss of a diluent or solvent.

The invention accordingly provides products and methods for improving the health of hoofed animals particularly barefoot horses by combining the packing, pad and "shoe" into a single application that is simple enough for the nonprofessional skilled owner to practice, using a hoof recess-filling plug from reactive resin mixtures filled into the hoof recess from a dual cartridge dispenser containing separate, reactive precursor components of the hoof packing and plug-shoe-forming material that sets up quickly to a firm, somewhat resilient plug mass that adheres to and yet moves with the hoof wall, frog and sole portions as they move under the forces of ground impacts, plug adhesion militating against loss of the plug from the recess and plug deterioration even over weeks of use, and preventing incursions of environmental hazards such as trail debris and moisture between the plug and the hoof portions.

## Claims

1. An integral all-in-one packing and pad for barefoot horse hoof (26) protection, consisting of a plug of resin (10) in adherent contact with the hoof bottom wall (18) and the full vertical extent of the interior hoof side wall (14), the plug of resin dimensioned sufficient for ground contact adjacent the bottom face (16) of the hoof side wall to enable said packing and pad to function as a horseshoe substitute.

2. The integral all-in-one packing and pad of claim 1, wherein said plug of resin (10) is a solid, void-free resin that, in use, is in adherent contact with the hoof bottom wall (18) and the full vertical extent of the interior hoof side wall (14) so as to prevent against debris and moisture incursion into an interior recess (12) defined by said hoof side wall and said hoof bottom wall.

3. The integral all-in-one packing and pad of claim 1 or claim 2, in which said resin is formed from reactive components in admixed relation.

4. The integral all-in-one packing and pad of claim 3, wherein said resin plug reactive components comprise liquid urethane reactants reacting to form a non-flowing resin plug (10) in less than about 15-20 seconds, said resin plug having a hardness of greater than 65 on the Shore A scale.

5. A method for extended protection of a shoe-less hoof (26) from environmental hazards, said hoof having a hoof side wall (14) and bottom wall (18) forming an interior recess (12), comprising cleaning said recess and filling said recess to the full vertical extent of the hoof side wall with a resin plug (10) adhered to said hoof bottom wall and hoof side wall, said plug dimensioned sufficient for ground contact adjacent the bottom face (16) of the hoof side wall.

6. The method according to claim 5 wherein the plug (10) is comprised of urethane resin.

7. The method according to claim 5, wherein the recess (12) is filled with a resin reactant mixture that flows freely into said recess in adhering relation to form said resin plug (10), the method further comprising simultaneously reacting said mixture at a rate precluding spillage of said resin from said recess such that the hoof side wall face (16) remains free of resin.

8. The method according to claim 5, including disposing said hoof side wall face (16) to receive the free flowing liquid resin.

9. The method according to claim 5 or claim 7, including also smoothing to a desired contour the just dispensed resin with a non-adherent wipe.

## Patentansprüche

1. Einstückige Universalpackung und Polster zum Schutz eines unbeschlagenen Pferdehufs (26), bestehend aus einem Harzpfropfen (10) in anhaftendem Kontakt mit der unterseitigen Hufwand (18) und der gesamten vertikalen Erstreckung der inneren Hufseitenwand (14), wobei der Harzpfropfen derart bemessen ist, dass angrenzend an die Bodenfläche (16) der Hufseitenwand ein ausreichender Bodenkontakt besteht, um die Packung und das Polster in die Lage zu versetzen, als Hufschuhersatz zu dienen.

2. Einstückige Universalpackung und Polster nach Anspruch 1, wobei der Harzpfropfen (10) ein festes, blasenfreies Harz ist, das im Gebrauch derart in anhaftendem Kontakt mit der unterseitigen Hufwand (18) und dem gesamten vertikalen Erstreckung der inneren Hufseitenwand (14) steht, dass eine innere Vertiefung (12), die durch die Hufseitenwand und die unterseitige Hufwand definiert ist, vor dem Eindringen von Schmutz und Feuchtigkeit geschützt ist.

3. Einstückige Universalpackung und Polster nach Anspruch 1 oder Anspruch 2, wobei das Harz aus reaktiven Komponenten in vermischtem Verhältnis gebildet ist.

4. Einstückige Universalpackung und Polster nach Anspruch 3, wobei die reaktiven Komponenten des Harzpfropfens flüssige Urethanreaktanten umfassen, um in weniger als etwa 15 bis 20 Sekunden einen nicht fließenden Harzpfropfen (10) zu bilden, wobei der Harzpfropfen auf der Shore A-Skala eine Härte von mehr als 65 aufweist.

5. Verfahren zum verlängerten Schutz eines unbeschlagenen Hufs (26) vor Umgebungsgefahren, wobei der Huf eine Hufseitenwand (14) und eine unterseitige Hufwand (18) aufweist, die eine innere Vertiefung (12) bilden, das Reinigen der Vertiefung und das Füllen der Vertiefung bis zur vollständigen vertikalen Erstreckung der Hufseitenwand mit einem Harzpfropfen (10) umfassend, der an der unterseitigen Hufwand und der Hufseitenwand haftet, wobei der Pfropfen derart bemessen ist, dass angrenzend an die Bodenfläche (16) der Hufseitenwand ein ausreichender Bodenkontakt besteht.

6. Verfahren nach Anspruch 5, wobei der Pfropfen (10) aus Urethanharz besteht.

7. Verfahren nach Anspruch 5, wobei die Vertiefung (12) mit einer Harzreaktantenmischung gefüllt wird, die in anhaftendem Verhältnis frei in die Vertiefung fließt, um den Harzpfropfen (10) zu bilden, wobei das Verfahren ferner das gleichzeitige Verreagieren der Mischung mit einer Geschwindigkeit umfasst, die das Austreten des Harzes aus der Vertiefung ausschließt, so dass die Hufseitenwandfläche (16) frei von Harz bleibt.

8. Verfahren nach Anspruch 5, das Anordnen der Hufseitenwandfläche (16) für die Aufnahme des frei fließenden flüssigen Harzes beinhaltend.

9. Verfahren nach Anspruch 5 oder Anspruch 7, außerdem das Glätten des gerade verteilten Harzes mit einem nicht haftenden Tuch auf eine gewünschte Kontur umfassend.

## Revendications

1. Ensemble intégral tout-en-un et coussinet pour la protection d'un sabot nu de cheval (26), constitué d'un bouchon de résine (10) en contact d'adhérence avec la paroi inférieure du sabot (18) et toute l'extension verticale de la paroi latérale interne du sabot (14), le bouchon de résine ayant une dimension suffisante pour obtenir un contact avec le sol adjacent à la face inférieure (16) de la paroi latérale du sabot afin de permettre audit ensemble et audit coussinet de fonctionner comme un produit de substitution de fer à cheval.

2. Ensemble intégral tout-en-un et coussinet selon la revendication 1, dans lequel ledit bouchon de résine (10) est une résine solide exempte de vides qui, lors de l'utilisation, est en contact d'adhérence avec la paroi inférieure du sabot (18) et toute l'extension verticale de la paroi latérale interne du sabot (14) de façon à prévenir l'incursion de débris et d'humidité dans un évidement interne (12) défini par ladite paroi latérale du sabot et ladite paroi inférieure du sabot.

3. Ensemble intégral tout-en-un et coussinet selon la revendication 1 ou la revendication 2, dans lequel ladite résine est formée de composants réactifs sous forme de mélange.

4. Ensemble intégral tout-en-un et coussinet selon la revendication 3, dans lequel lesdits composants réactifs formant le bouchon de résine comprennent des réactifs d'uréthane liquide réagissant pour former un bouchon de résine non fluide (10) en moins d'environ 15 à 20 secondes, ledit bouchon de résine ayant une dureté supérieure à 65 sur l'échelle Shore A.

5. Procédé de protection prolongée d'un sabot non ferré (26) contre les risques environnementaux, ledit sabot ayant une paroi latérale (14) et une paroi inférieure (18) de sabot formant un évidement interne (12), comprenant le nettoyage dudit évidement et le remplissage dudit évidement à hauteur de toute l'extension verticale de la paroi latérale du sabot avec un bouchon de résine (10) collé sur ladite paroi inférieure du sabot et ladite paroi latérale du sabot, ledit bouchon ayant une dimension suffisante pour obtenir un contact avec le sol adjacent à la face inférieure (16) de la paroi latérale du sabot.

6. Procédé selon la revendication 5, dans lequel le bouchon (10) est constitué de résine uréthane.

7. Procédé selon la revendication 5, dans lequel l'évidement (12) est rempli avec un mélange réactionnel de résine qui s'écoule librement dans ledit évidement en relation d'adhérence de façon à former ledit bouchon de résine (10), le procédé consistant en outre à faire réagir simultanément ledit mélange à une vitesse excluant un déversement de ladite résine dudit évidement de telle sorte que la face (16) de la paroi latérale du sabot demeure exempt de résine.

8. Procédé selon la revendication 5, consistant à disposer ladite face (16) de paroi latérale du sabot de façon à ce qu'elle reçoive la résine liquide s'écoulant librement.

9. Procédé selon la revendication 5 ou la revendication 7, consistant également à lisser jusqu'au contour souhaité la résine juste mise en place avec un chiffon anti-adhérent.
